# EUROPÄISCHE PATENTSCHRIFT

(11) **EP 2 426 947 B1**
(45) Veröffentlichungstag und Bekanntmachung des Hinweises auf die Patenterteilung: **24.01.2018**
(21) Anmeldenummer: 11006997.8
(22) Anmeldetag: 26.08.2011
(51) Int. Cl.: H04Q 9/00, G01D 4/00

(54) **VERFAHREN, VORRICHTUNG UND VORRICHTUNGSANORDNUNG ZUR SELEKTIVEN BEREITSTELLUNG VON VERBRAUCHSDATEN**
METHOD, DEVICE AND DEVICE ASSEMBLY FOR SELECTIVE PREPARATION OF CONSUMPTION DATA
PROCÉDÉ, DISPOSITIF ET AGENCEMENT DE DISPOSITIF POUR LA PRÉPARATION SÉLECTIVE DE DONNÉES DE CONSOMMATION

(30) Priorität: 06.09.2010 DE 102010044500
(43) Veröffentlichungstag der Anmeldung: 07.03.2012
(73) Patentinhaber: METRONA WÄRMEMESSER UNION GMBH, 81379 München (DE)
(72) Erfinder: Kohlschmidt, Jörg, 81673 München (DE)
(74) Vertreter: Prinz & Partner mbB

(56) Entgegenhaltungen:
- EP-A1- 1 032 238
- DE-A1-102008 014 013

## Beschreibung

Die Erfindung betrifft ein Verfahren, eine Vorrichtung und eine Vorrichtungsanordnung zur selektiven Bereitstellung von Verbrauchsdaten, die einem Nutzer zugeordnet sind.

Im Zuge der Einführung von "Smart Metering" ist es neben der Fernauslesung von Verbrauchsmengen von Gas, Wasser, Strom, etc. durch den Versorgungsdienstleister vorgesehen, dem Nutzer einer Wohneinheit durch Bereitstellung seiner aktuellen Verbrauchsdaten einen schnellen und genauen Einblick in sein Verbrauchsverhalten zu ermöglichen.

Aus der DE 10 2004 036 048 A1 ist es bekannt, einen elektronischen Stromzähler mit einem Funkmodem zu versehen, das insbesondere per WLAN mit der Telefonanlage des Kunden verbunden ist. Auf diese Weise wird eine bidirektionale Datenverbindung zwischen dem Telefon im Haushalt des Kunden dem Versorgungsunternehmen hergestellt. Diese Verbindung dient zum einen zur Fernabfrage der verbrauchten elektrischen Energie für die Ablesung und Abrechnung durch das Versorgungsunternehmen, zum anderen können dem Kunden auf einer digitalen Anzeigevorrichtung des elektronischen Haushaltszählers der Verbrauch, die aktuelle Leistung und Tarifinformationen angezeigt werden.

Die DE 10 2006 003 333 A1 zeigt ein Verbrauchsanzeigegerät, das für eine drahtlose/drahtgebundene Nachrichtenübertragung mit einer zentralen Datenerfassungseinrichtung verbunden ist. Die Schnittstellenschaltung der zentralen Datenerfassungseinrichtung kann drahtlos mit öffentlichen Kommunikationsnetzen (GSM, GPRS, Internet) verbinden und die gesammelten Verbrauchsdaten in regelmäßigen zeitlichen Intervallen an einen entfernten Empfänger (z. B. Versorgungs- und/oder Abrechnungsdienstleister) versenden. Bei der Erst-Inbetriebnahme des Verbrauchsanzeigegeräts werden von allen empfangbaren Verbrauchszählern diejenigen ausgewählt, die für den Endkunden bestimmt sind. Die Auswahl der für den Endkunden bestimmten Verbrauchszähler erfolgt manuell am Verbrauchsanzeigegerät. Die in den Datenspeicher des Geräts eingelesenen Daten werden mit einer Kennung (Zähleradresse und Datum) unverkennbar abgelegt, wobei ohne Authentisierung ein Löschen des Datenspeichers nicht möglich ist. Neben der Anzeige der aktuellen Verbrauchsdaten werden wöchentliche, monatliche oder jährliche Vergangenheitswerte gespeichert und auf Benutzeranforderung zur Anzeige gebracht.

Die DE 10 2009 040 226 A1 beschreibt ein Verfahren, bei dem die von einer oder mehreren Server-Rechnereinheiten, die zur Steuerung von Messgeräten (Verbrauchszählern) dienen, zur Verfügung gestellten Daten gegebenenfalls auf Anfrage eines Endnutzers von einer Client-Rechnereinheit (seitens des Versorgungs- und/oder Abrechnungsdienstleisters) über ein Kommunikationsnetzwerk (HTTP-Protokolle) abgerufen und weiterbearbeitet werden. Vorher, bei der Bearbeitung der Daten in den Server-Rechnereinheiten zu clientfähigen Daten, werden die Messdaten als XML-Dokumente erstellt und verschlüsselt. Die Clientstation umfasst ein als Verbraucherportal ausgebildetes Anwendermodul, auf das der Endnutzer zugreifen kann, wobei der Zugriff nur autorisierten Verbrauchern möglich ist. Mit dem Nutzermodul werden Endnutzern individuelle, aktuelle und historische Informationen über die Messgeräte seines Haushalts zur Verfügung gestellt.

Aus der EP 2 141 892 A2 sind ein Verfahren, eine Vorrichtung und eine Vorrichtungsanordnung zur selektiven Bereitstellung von Verbrauchsdaten mit den Merkmalen der Oberbegriffe der Ansprüche 1, 7 bzw. 11 bekannt. Die Verbrauchsdaten werden von den Verbrauchsdatenerfassungsgeräten des Nutzers zunächst zu einer im Haus oder benachbart befindlichen Sendeeinrichtung übertragen, die auch Verbrauchsdaten von Verbrauchsdatenerfassungsgerätes eines anderen Nutzers empfängt. Von der Sendeeinrichtung werden sämtliche Verbrauchsdaten an eine mobile Sende- und Empfangseinrichtung (Mobiltelefon oder PDA) des Nutzers übermittelt. Um im Einklang mit dem Datenschutz zu gewährleisten, dass der Nutzer nur Zugang zu seinen eigenen Verbrauchsdaten erhält, muss die mobile Sende- und Empfangseinrichtung erst konfiguriert werden. Die Konfigurationsdaten für eine entsprechende Filterung und gegebenenfalls für eine weitergehende Verarbeitung der Verbrauchsdaten werden vom Versorger auf die mobile Sende- und Empfangseinrichtung des Nutzers übertragen, nachdem sich der Nutzer auf einer Internet-Seite des Versorgers eingewählt und authentifiziert hat. Da die mobile Sende- und Empfangseinrichtung des Nutzers nicht der Kontrolle durch den Versorger unterliegt, besteht die grundsätzliche Gefahr, dass die Konfigurationsdaten manipuliert werden.

Aufgabe der Erfindung ist es, die nutzerbezogene Bereitstellung von Verbrauchsdaten sicherer zu gestalten.

Gelöst wird diese Aufgabe durch ein erfindungsgemäßes Verfahren, eine erfindungsgemäße Vorrichtung und eine erfindungsgemäße Vorrichtungsanordnung zur selektiven Bereitstellung von Verbrauchsdaten mit den Merkmalen des Anspruchs 1, des Anspruchs 7 bzw. des Anspruchs 11. Vorteilhafte und zweckmäßige Ausgestaltungen des Verfahrens, der Vorrichtung und der Vorrichtungsanordnung sind in den zugehörigen Unteransprüchen angegeben.

Das erfindungsgemäße Verfahren zur selektiven Bereitstellung von Verbrauchsdaten, die einem Nutzer zugeordnet sind, umfasst folgende Schritte:
- Empfangen von Verbrauchsdaten, welche von wenigstens einem dem Nutzer zugeordneten Verbrauchsdatenerfassungsgerät erfasst wurden, in einer Sammelvorrichtung, und
- Übermitteln der Verbrauchsdaten von der Sammelvorrichtung an ein vorzugsweise mobiles, dem Nutzer zugeordnetes Anzeigegerät.

Vor dem Übermitteln der Verbrauchsdaten werden in der Sammelvorrichtung ein Geräteidentifikationscode zur Identifikation des dem Nutzer zugeordneten Anzeigegeräts sowie Informationen für eine Zuordnung der von dem wenigstens einen Verbrauchsdatenerfassungsgerät erfassten Verbrauchsdaten zu dem Anzeigegerät hinterlegt. Die Sammelvorrichtung führt bei einem Verbindungsaufbau mit dem Anzeigegerät einen Identifikationsprozess durch, mit dem die Sammelvorrichtung das Anzeigegerät anhand des hinterlegten Geräteidentifikationscodes identifizieren kann und in der Folge nur die dem Anzeigegerät zugeordneten Verbrauchsdaten an das Anzeigegerät übermittelt.

Insbesondere in Bezug auf die Übermittlung der Verbrauchsdaten an das Anzeigegerät soll der Begriff Verbrauchsdaten nicht nur die nackten Daten umfassen, wie sie ursprünglich vom Verbrauchsdatenerfassungsgerät geliefert werden, sondern auch die Daten in verarbeiteter bzw. aufbereiteter Form.

Das erfindungsgemäße Verfahren verlagert den Konfigurationsprozess in die Sammelvorrichtung, in der die Verbrauchsdaten mehrerer Verbrauchsdatenerfassungsgeräte zusammenfließen, die verschiedenen Wohneinheiten bzw. Nutzern zugeordnet sind. In der Praxis werden solche Sammelvorrichtungen ohne die erfindungsgemäße Funktionalität bislang als reine Datensammler bzw. Zwischenstationen bei der Übertragung der Verbrauchsdaten an den Versorgungsdienstleister eingesetzt. Die Sammelvorrichtungen stehen unter der Kontrolle des Versorgungsdienstleisters. Somit kann bei erfindungsgemäßem Einsatz solcher Sammelvorrichtungen seitens des Versorgungsdienstleisters sichergestellt werden, dass die Filterung der Daten eines bestimmten Nutzers aus den gesamten Verbrauchsdaten mehrerer Nutzer nicht manipulierbar ist. Beispielsweise kann die Sammelvorrichtung so angeordnet oder ausgebildet sein, dass sie nur für befugtes Personal zugänglich ist. In der Regel dürfte es ausreichen, die in der Vorrichtung ablaufenden Programme (Software) und Datenströme durch geeignete Maßnahmen zu schützen.

Die Erfindung hat darüber hinaus den Vorteil, dass eine Konfiguration des Anzeigegeräts, auf dem der Nutzer seine Verbrauchsdaten einsehen kann, nicht erforderlich ist. Der Nutzer muss also keine Vorkehrungen an seinem Anzeigegerät vornehmen, um einen Einblick in sein Verbrauchsverhalten zu bekommen. Außerdem muss im Vergleich zum Verfahren gemäß der EP 2 141 892 A2 bei jeder Anfrage nur ein Bruchteil der Verbrauchsdaten an das Anzeigegerät des Nutzers übertragen werden, da die Filterung der Verbrauchsdaten bereits in der Sammelvorrichtung des Versorgungsdienstleisters erfolgen kann.

Gemäß der bevorzugten Ausführungsform des erfindungsgemäßen Verfahrens empfängt die Sammelvorrichtung den Geräteidentifikationscode und die Zuordnungsinformationen von einem Versorgungsdienstleister. Diese Zugangsdaten werden also nicht an den Nutzer bzw. dessen Anzeigegerät übermittelt, sondern direkt an die Sammelvorrichtung.

In der Praxis wird der Versorgungsdienstleister vorzugsweise einen Ablauf vorsehen, gemäß dem er nach einer Anmeldung des Nutzers ein nutzerspezifisches Zertifikat an die Sammelvorrichtung übermittelt, das den Geräteidentifikationscode und die Zugangsinformationen enthält.

Besonders vorteilhaft ist es, dass bei der bevorzugten Ausführungsform der Erfindung eine nutzerspezifische Filterung der empfangenen Verbrauchsdaten bereits in der Sammelvorrichtung vorgenommen wird. Eine entsprechende Datenselektion im Anzeigegerät des Nutzers ist nicht erforderlich, das heißt im Anzeigegerät muss keine besondere Applikation installiert werden.

Besonders komfortabel wird die nutzerspezifische Bereitstellung der Verbrauchsdaten dadurch, dass die Sammelvorrichtung eine für das Anzeigegerät spezifische Website mit den dem Anzeigegerät zugeordneten Verbrauchsdaten erstellt. Die Anzeige von Websites ist inzwischen mit einer Vielzahl mobiler Geräte möglich. Anwendungsspezifische Anpassungen auf dem Anzeigegerät sind dann nicht erforderlich.

Zur Erhöhung der Sicherheit, insbesondere um ein "Abhören" der auf das Anzeigegerät des Nutzers übertragenen Daten zu verhindern, kann wenigstens für die von der Sammelvorrichtung zum Anzeigegerät übertragenen Daten eine nutzerspezifische Verschlüsselung vorgesehen werden.

Gegenstand der Erfindung ist auch eine Vorrichtung zur selektiven Bereitstellung von Verbrauchsdaten, die einem Nutzer zugeordnet sind. Die erfindungsgemäße Vorrichtung umfasst eine Empfangseinrichtung, die zum Empfang von Verbrauchsdaten eingerichtet ist, welche von wenigstens einem dem Nutzer zugeordneten Verbrauchsdatenerfassungsgerät erfasst wurden. Die erfindungsgemäße Vorrichtung umfasst ferner eine Kommunikationsschnittstelle, die zur Übermittlung der Verbrauchsdaten an ein vorzugsweise mobiles, dem Nutzer zugeordnetes Anzeigegerät eingerichtet ist. In der Vorrichtung sind ein Geräteidentifikationscode zur Identifikation des dem Nutzer zugeordneten Anzeigegeräts sowie Informationen für eine Zuordnung der von dem wenigstens einen Verbrauchsdatenerfassungsgerät erfassten Verbrauchsdaten zu dem Anzeigegerät hinterlegt. Die erfindungsgemäße Vorrichtung ist so eingerichtet, dass sie bei einem Verbindungsaufbau mit dem Anzeigegerät das Anzeigegerät anhand des Geräteidentifikationscodes identifizieren kann und nur die dem Anzeigegerät zugeordneten Verbrauchsdaten an das Anzeigegerät übermittelt.

Die Erfindung schafft auch eine Vorrichtungsanordnung zur selektiven Bereitstellung von Verbrauchsdaten, die einem Nutzer zugeordnet sind. Die erfindungsgemäße Vorrichtungsanordnung umfasst mehrere Verbrauchsdatenerfassungsgeräte, die verschiedenen Nutzern zugeordnet sind und Sendeeinrichtungen zum Aussenden von erfassten Verbrauchsdaten aufweisen, sowie ein vorzugsweise mobiles Anzeigegerät, das einem der Nutzer zugeordnet ist. Die Vorrichtungsanordnung umfasst ferner eine erfindungsgemäße Vorrichtung zur selektiven Bereitstellung von Verbrauchsdaten.

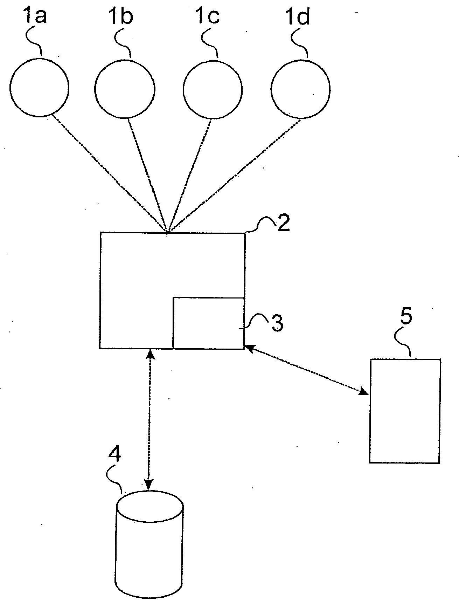

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur eine Vorrichtungsanordnung mit einer Vorrichtung zur selektiven Bereitstellung von Verbrauchsdaten gemäß der Erfindung.

In der Figur ist eine Vorrichtungsanordnung mit mehreren Verbrauchsdatenerfassungsgeräten 1a bis 1d, einer Vorrichtung 2 zur selektiven Bereitstellung von Verbrauchsdaten (die gemäß der später erläuterten Funktionsweise der Vorrichtungsanordnung auch als Sammelvorrichtung bezeichnet werden kann) und einem Anzeigegerät 5.

Die Verbrauchsdatenerfassungsgeräte 1a bis 1d befinden sich in verschiedenen Wohneinheiten und erfassen dementsprechend Verbrauchsdaten von mehreren Nutzern. Beispielsweise könnten die Verbrauchsdatenerfassungsgeräte 1a und 1b einem ersten Nutzer einer ersten Wohneinheit und die Verbrauchsdatenerfassungsgeräte 1c und 1d einem zweiten Nutzer einer zweiten Wohneinheit zugeordnet sein. Diese Zuordnungen sind dem Versorgungs- bzw. Abrechnungsdienstleister (im Folgenden der Einfachheit halber nur als Versorgungsdienstleister bezeichnet) bekannt. Die Verbrauchsdatenerfassungsgeräte 1a bis 1d sind mit Sendeeinrichtungen zum drahtlosen Aussenden der erfassten Verbrauchsdaten ausgestattet.

Die Vorrichtung 2 weist eine nicht eigens dargestellte Empfangseinrichtung zum Empfangen der von den Verbrauchsdatenerfassungsgeräten 1a bis 1d ausgesendeten Verbrauchsdaten auf. Ferner ist die Vorrichtung 2 für eine Kommunikation mit einem Rechenzentrum 4 des Versorgungsdienstleisters eingerichtet. Unter Umständen können noch eine oder mehrere Zwischenstationen auf dem Kommunikationsweg von den Verbrauchsdatenerfassungsgeräten 1a bis 1d zum Rechenzentrum, genauer gesagt zwischen den Verbrauchsdatenerfassungsgeräten 1a bis 1d und der Vorrichtung 2 und/oder zwischen der Vorrichtung 2 und dem Rechenzentrum 4 des Versorgungsdienstleisters vorgesehen sein. Eine Recheneinheit der Vorrichtung 2 ist zur Verarbeitung, insbesondere zur nutzerspezifischen Filterung der empfangenen Verbrauchsdaten vorgesehen. Außerdem hat die Recheneinheit eine Webserver-Funktionalität, das heißt die Vorrichtung 2 ist in der Lage, Websites zu erstellen, die mittels eines Internet-Browsers angezeigt werden können. Die Vorrichtung 2 verfügt außerdem über eine Kommunikationsschnittstelle 3, die eine bidirektionale Kommunikation mit dem Anzeigegerät 5 ermöglicht.

Das Anzeigegerät 5 ist ein im Besitz des Nutzers einer Wohneinheit befindliches mobiles Gerät, zum Beispiel ein Mobiltelefon, Smartphone, PDA, Laptop, etc., kann aber grundsätzlich auch ein stationäres Gerät in der Wohneinheit sein, zum Beispiel ein PC mit einem Bildschirm. Das Anzeigegerät verfügt über eine Kommunikationsschnittstelle und kann mit der Vorrichtung 2 über deren Kommunikationsschnittstelle 3 vorzugsweise drahtlos kommunizieren. Die Kommunikation erfolgt auf der Grundlage einer gängigen Verbindungstechnik, wie WLAN, Bluetooth, etc.

Die von den Verbrauchsdatenerfassungsgeräten 1a bis 1d erfassten und ausgesendeten Verbrauchsdaten werden allesamt (direkt oder indirekt) von der Vorrichtung 2 empfangen und dort zwischengespeichert. In der Vorrichtung 2 sind somit Verbrauchsdaten von mehreren Wohneinheiten abgelegt, die verschiedenen Nutzern zugeordnet sind.

Will nun einer dieser Nutzer über sein Anzeigegerät 5 Einblick in seine aktuellen Verbrauchsdaten nehmen, muss er sich einmalig beim Versorgungsdienstleister mit seinem Anzeigegerät 5 anmelden. Dem Nutzer wird daraufhin vom Versorgungsdienstleister ein eindeutiger, unverwechselbarer Nutzeridentifikationscode zugeteilt. Über die Verbindung mit dem Rechenzentrum 4 des Versorgungsdienstleisters werden der Nutzeridentifikationscode sowie ein Geräteidentifikationscode zur Identifikation des dem Nutzer zugeordneten Anzeigegeräts 5, wie etwa dessen IMEI-Nummer oder MAC-Adresse, an die Vorrichtung 2 gesendet und dort als nutzerbezogenes Zertifikat hinterlegt. Mit dem Nutzeridentifikationscode ist es möglich, in der Recheneinheit der Vorrichtung 2 von allen in der Vorrichtung 2 empfangenen Verbrauchsdaten diejenigen Verbrauchsdaten dem Nutzer zuzuordnen, die von den Verbrauchsdatenerfassungsgeräten in dessen Wohneinheit stammen. Da der Vorrichtung 2 durch das nutzerbezogene Zertifikat auch das Anzeigegerät 5 des Nutzers bekannt gemacht wird, stellt das nutzerbezogene Zertifikat letztendlich eine Zuordnung der von den Verbrauchsdatenerfassungsgeräten in der Wohneinheit des Nutzers erfassten Verbrauchsdaten zu dem Anzeigegerät 5 des Nutzers dar.

Nun ist der Nutzer in der Lage, ohne vorherige Kommunikation mit dem Versorgungsdienstleister bei Bedarf über die Kommunikationsschnittstelle 3 eine Verbindung über sein Anzeigegerät 5 mit der Vorrichtung 2 aufzubauen. Die Vorrichtung 2 erkennt dabei das Anzeigegerät 5 anhand des in der Vorrichtung 2 zuvor hinterlegten Geräteinformationscodes (IMEI-Nummer, MAC-Adresse oder dergleichen) und stellt dem Nutzer die ihm zugeordneten Daten zur Verfügung. Dazu erstellt die Vorrichtung 2 eine nutzerspezifische Website, auf der die relevanten Daten in aufbereiteter Form dargestellt sind. Diese Website kann der Nutzer mit dem Browser seines Anzeigegeräts 5 einfach abrufen und sich anzeigen lassen. Selbstverständlich können für die Erstellung und Anzeige der Verbrauchsdaten auch andere vergleichbare, auf Mobilgeräte zugeschnitte Techniken Verwendung finden.

Um das Mitlesen bzw. Abfangen der Daten durch Dritte zu verhindern, kann eine nutzerspezifische Verschlüsselung der übertragenen Daten vorgesehen sein.

Alternativ zur Funktechnik können die Daten zumindest teilweise auch über das Stromnetz, genauer gesagt über eine gemeinsame Stromleitung übertragen werden (PLC = Power Line Communication).

Dem Nutzer ist es möglich, durch einfaches Löschen des Geräteidentifikationscodes den Zugang zu seinen Verbrauchsdaten zu sperren.

Selbstverständlich kann sich der Nutzer auch mit mehreren Anzeigegeräten 5 anmelden. Es werden in diesem Fall mehrere Geräteinformationscodes in der Vorrichtung 2 hinterlegt.

## Patentansprüche

1. Verfahren zur selektiven Bereitstellung von Verbrauchsdaten, die einem Nutzer zugeordnet sind, mit folgenden Schritten:
- Empfangen von Verbrauchsdaten, welche von wenigstens einem dem Nutzer zugeordneten Verbrauchsdatenerfassungsgerät (1a bis 1d) erfasst wurden, in einer Sammelvorrichtung (2), und
- Übermitteln der Verbrauchsdaten von der Sammelvorrichtung (2) an ein vorzugsweise mobiles, dem Nutzer zugeordnetes Anzeigegerät (5),
**dadurch gekennzeichnet, dass**
vor dem Übermitteln der Verbrauchsdaten in der Sammelvorrichtung (2) ein Geräteidentifikationscode zur Identifikation des dem Nutzer zugeordneten Anzeigegeräts (5) sowie Informationen für eine Zuordnung der von dem wenigstens einen Verbrauchsdatenerfassungsgerät (1a bis 1d) erfassten Verbrauchsdaten zu dem Anzeigegerät (5) hinterlegt werden, und
die Sammelvorrichtung (2) bei einem Verbindungsaufbau mit dem Anzeigegerät (5) einen Identifikationsprozess durchführt, mit dem die Sammelvorrichtung (2) das Anzeigegerät (5) anhand des hinterlegten Geräteidentifikationscodes identifizieren kann und in der Folge nur die dem Anzeigegerät (5) zugeordneten Verbrauchsdaten an das Anzeigegerät (5) übermittelt.

2. Verfahren nach Anspruch 1, **dadurch gekennzeichnet, dass** die Sammelvorrichtung (2) den Geräteidentifikationscode und die Zuordnungsinformationen von einem Versorgungsdienstleister empfängt.

3. Verfahren nach Anspruch 2, **dadurch gekennzeichnet, dass** der Versorgungsdienstleister nach einer Anmeldung des Nutzers ein nutzerspezifisches Zertifikat an die Sammelvorrichtung (2) übermittelt, das den Geräteidentifikationscode und die Zuordnungsinformationen enthält.

4. Verfahren nach einem der vorhergehenden Ansprüche, **dadurch gekennzeichnet, dass** in der Sammelvorrichtung (2) eine nutzerspezifische Filterung der empfangenen Verbrauchsdaten vorgenommen wird.

5. Verfahren nach Anspruch 4, **dadurch gekennzeichnet, dass** die Sammelvorrichtung (2) eine für das Anzeigegerät (5) spezifische Website mit den dem Anzeigegerät (5) zugeordneten Verbrauchsdaten erstellt.

6. Verfahren nach einem der vorhergehenden Ansprüche, **dadurch gekennzeichnet, dass** wenigstens die von der Sammelvorrichtung (2) zum Anzeigegerät (5) übertragenen Daten einer nutzerspezifischen Verschlüsselung unterzogen werden.

7. Vorrichtung zur selektiven Bereitstellung von Verbrauchsdaten, die einem Nutzer zugeordnet sind, mit
einer Empfangseinrichtung, die zum Empfang von Verbrauchsdaten eingerichtet ist, welche von wenigstens einem dem Nutzer zugeordneten Verbrauchsdatenerfassungsgerät (1a bis 1d) erfasst wurden,
einer Kommunikationsschnittstelle (3), die zur Übermittlung der Verbrauchsdaten an ein vorzugsweise mobiles, dem Nutzer zugeordnetes Anzeigegerät (5) eingerichtet ist,
**dadurch gekennzeichnet, dass**
in der Vorrichtung (2) ein Geräteinformationscode zur Identifikation des dem Nutzer zugeordneten Anzeigegeräts (5) sowie Informationen für eine Zuordnung der von dem wenigstens einen Verbrauchsdatenerfassungsgerät (1a bis 1d) erfassten Verbrauchsdaten zu dem Anzeigegerät (5) hinterlegt sind, und
die Vorrichtung (2) so eingerichtet ist, dass sie bei einem Verbindungsaufbau mit dem Anzeigegerät (5) das Anzeigegerät (5) anhand des hinterlegten Geräteidentifikationscodes identifizieren kann und nur die dem Anzeigegerät zugeordneten Verbrauchsdaten an das Anzeigegerät (5) übermittelt.

8. Vorrichtung nach Anspruch 7, **dadurch gekennzeichnet, dass** die Vorrichtung (2) zum Empfang des Geräteidentifikationscodes und der Zuordnungsinformationen von einem Versorgungsdienstleister eingerichtet ist.

9. Vorrichtung nach Anspruch 7 oder 8, **gekennzeichnet durch** eine Recheneinheit zur nutzerspezifischen Filterung der empfangenen Verbrauchsdaten.

10. Vorrichtung nach Anspruch 9, **dadurch gekennzeichnet, dass** die Vorrichtung (2) einen Webserver umfasst, der eine für das Anzeigegerät (5) spezifische Website mit den dem Anzeigegerät (5) zugeordneten Verbrauchsdaten erstellt.

11. Vorrichtungsanordnung zur selektiven Bereitstellung von Verbrauchsdaten, die einem Nutzer zugeordnet sind, mit
mehreren Verbrauchsdatenerfassungsgeräten (1a bis 1d), die verschiedenen Nutzern zugeordnet sind und Sendeeinrichtungen zum Aussenden von erfassten Verbrauchsdaten aufweisen, und
einem vorzugsweise mobilen Anzeigegerät (5), das einem der Nutzer zugeordnet ist,
**gekennzeichnet durch** eine Vorrichtung (2) nach einem der Ansprüche 7 bis 10.

## Claims

1. A method of selectively providing consumption data associated with a user, comprising the following steps:
- receiving, in a collecting device (2), consumption data that were acquired by at least one consumption data acquisition apparatus (1a to 1d) associated with the user; and
- transmitting the consumption data from the collecting device (2) to a preferably mobile display device (5) associated with the user,
**characterized in that**
prior to transmitting the consumption data, a device identification code for identification of the display device (5) associated with the user as well as information for an association of the consumption data acquired by the at least one consumption data acquisition apparatus (1a to 1d) with the display device (5) are stored in the collecting device (2); and
when a connection is set up with the display device (5), the collecting device (2) carries out an identification process by which the collecting device (2) can identify the display device (5) based on the device identification code stored, and subsequently transmits to the display device (5) only the consumption data associated with the display device (5).

2. The method according to claim 1, **characterized in that** the collecting device (2) receives the device identification code and the association information from a utility service provider.

3. The method according to claim 2, **characterized in that** after a registration of the user, the utility service provider transmits to the collecting device (2) a user-specific certificate which contains the device identification code and the association information.

4. The method according to any of the preceding claims, **characterized in that** a user-specific filtering of the consumption data received is performed in the collecting device (2).

5. The method according to claim 4, **characterized in that** the collecting device (2) prepares a web site specific to the display device (5) and containing the consumption data associated with the display device (5).

6. The method according to any of the preceding claims, **characterized in that** at least the data transmitted to the display device (5) by the collecting device (2) are subjected to a user-specific encryption.

7. A device for selectively providing consumption data associated with a user, comprising
a receiving means that is adapted to receive consumption data that were acquired by at least one consumption data acquisition apparatus (1a to 1d) associated with the user;
a communication interface (3) that is adapted to transmit the consumption data to a preferably mobile display device (5) associated with the user,
**characterized in that**
a device information code for identification of the display device (5) associated with the user as well as information for an association of the consumption data acquired by the at least one consumption data acquisition apparatus (1a to 1d) with the display device (5) are stored in the device (2); and
the device (2) is adapted such that when a connection is set up with the display device (5), it can identify the display device (5) based on the device identification code stored and transmits to the display device (5) only the consumption data associated with the display device.

8. The device according to claim 7, **characterized in that** the device (2) is adapted to receive the device identification code and the association information from a utility service provider.

9. The device according to claim 7 or 8, **characterized by** an arithmetic unit for user-specific filtering of the consumption data received.

10. The device according to claim 9, **characterized in that** the device (2) comprises a web server which prepares a web site specific to the display device (5) and containing the consumption data associated with the display device (5).

11. A device arrangement for selectively providing consumption data associated with a user, comprising
a plurality of consumption data acquisition apparatuses (1a to 1d) which are associated with a variety of users and include transmission means for sending acquired consumption data; and
a preferably mobile display device (5) associated with one of the users,
**characterized by** a device (2) according to any of claims 7 to 10.

## Revendications

1. Procédé de mise à disposition sélective de données de consommation associées à un utilisateur, comprenant les étapes suivantes :
- la réception de données de consommation qui ont été saisies par au moins un appareil de saisie de données de consommation (1a à 1d) associé à l'utilisateur dans un dispositif collecteur (2), et
- la transmission de données de consommation du dispositif collecteur (2) à un appareil d'affichage (5) de préférence mobile, associé à l'utilisateur,
**caractérisé en ce que**
avant la transmission des données de consommation, un code d'identification d'appareil pour l'identification de l'appareil d'affichage (5) associé à l'utilisateur ainsi que des informations pour une association des données de consommation saisies par ledit au moins un appareil de saisie de données de consommation (1a à 1d) à l'appareil d'affichage (5) sont enregistrés dans le dispositif collecteur (2), et
le dispositif collecteur (2) réalise, lors de l'établissement d'une communication avec l'appareil d'affichage (5), une procédure d'identification au moyen de laquelle le dispositif collecteur (2) peut identifier l'appareil d'affichage (5) sur la base du code d'identification d'appareil enregistré et transmet en conséquence uniquement les données de consommation associées à l'appareil d'affichage (5) à l'appareil d'affichage (5).

2. Procédé selon la revendication 1, **caractérisé en ce que** le dispositif collecteur (2) reçoit le code d'identification d'appareil et les informations d'association d'un prestataire de services d'approvisionnement.

3. Procédé selon la revendication 2, **caractérisé en ce que** le prestataire de services d'approvisionnement transmet un certificat spécifique à l'utilisateur contenant le code d'identification d'appareil et les informations d'association au dispositif collecteur (2) suite à un enregistrement de l'utilisateur.

4. Procédé selon l'une des revendications précédentes, **caractérisé en ce qu'**un filtrage spécifique à l'utilisateur des données de consommation reçues est réalisé dans le dispositif collecteur (2).

5. Procédé selon la revendication 4, **caractérisé en ce que** le dispositif collecteur (2) établit un site Internet spécifique à l'appareil d'affichage (5) au moyen des données de consommation associées à l'appareil d'affichage (5).

6. Procédé selon l'une des revendications précédentes, **caractérisé en ce qu'**au moins les données transmises du dispositif collecteur (2) à l'appareil d'affichage (5) sont soumises à codage spécifique à l'utilisateur.

7. Dispositif de mise à disposition sélective de données de consommation associées à un utilisateur, comportant :
un moyen de réception aménagé pour la réception de données de consommation qui ont été saisies par au moins un appareil de saisie de données de consommation (1a à 1d) associées à l'utilisateur,
une interface de communication (3) ménagée pour la transmission des données de consommation à un appareil d'affichage (5) de préférence mobile, associé à l'utilisateur,
**caractérisé en ce que**
un code d'information d'appareil pour l'identification de l'appareil d'affichage (5) associé à l'utilisateur ainsi que des informations pour une association des données de consommation saisies par ledit au moins un appareil de saisie de données de consommation (1a à 1d) à l'appareil d'affichage (5) sont enregistrés dans le dispositif (2), et
le dispositif (2) est ménagé de manière à pouvoir identifier l'appareil d'affichage (5) sur la base du code d'identification d'appareil enregistré lors de l'établissement d'une communication avec l'appareil d'affichage (5), et à transmettre uniquement les données de consommation associées à l'appareil d'affichage à l'appareil d'affichage (5).

8. Dispositif selon la revendication 7, **caractérisé en ce que** le dispositif (2) est ménagé pour la réception du code d'identification d'appareil et des informations d'association provenant d'un prestataire de services d'approvisionnement.

9. Dispositif selon la revendication 7 ou 8, **caractérisé par** une unité arithmétique pour le filtrage spécifique à l'utilisateur des données de consommation reçues.

10. Dispositif selon la revendication 9, **caractérisé en ce que** le dispositif (2) comprend un serveur Web qui établit un site Internet spécifique à l'appareil d'affichage (5) au moyen des données de consommation associées à l'appareil d'affichage (5).

11. Agencement de dispositif pour la mise à disposition sélective de données de consommation associées à un utilisateur, comportant :
plusieurs appareils de saisie de données de consommation (1a à 1d) qui sont associés à différents utilisateurs et qui présentent des moyens d'émission pour l'émission de données de consommation saisies, et
un appareil d'affichage (5) de préférence mobile, associé à l'utilisateur,
**caractérisé par** un dispositif (2) selon l'une des revendications 7 à 10.
